# FASCICULE DE BREVET EUROPEEN

(11) **EP 3 596 348 B1**
(45) Date de publication et mention de la délivrance du brevet: **10.08.2022**
(21) Numéro de dépôt: 18714575.0
(22) Date de dépôt: 14.03.2018
(51) Int. Cl.: F16B 41/00, F16B 1/00

(54) **MANCHON AMOVIBLE POUR LE MAINTIEN ET LA FIXATION DE VIS**
ABNEHMBARE HÜLSE ZUM HALTEN UND BEFESTIGEN VON SCHRAUBEN
REMOVABLE SLEEVE FOR HOLDING AND FIXING SCREWS

(30) Priorité: 16.03.2017 FR 1752144
(43) Date de publication de la demande: 22.01.2020
(73) Titulaire: Sogefi Air & Cooling, 78280 Guyancourt (FR)
(72) Inventeur: BECKER, Nicolas, 68320 Porte Du Ried (FR); ANCEL, Benoît, 68420 Eguisheim (FR)
(74) Mandataire: Cabinet Nuss
(86) Numéro de dépôt international: PCT/FR2018/050608
(87) Numéro de publication internationale: WO 2018/167427

(56) Documents cités:
- DE-A1-102006 046 262
- DE-U1- 29 804 041
- US-A- 3 156 281
- US-A1- 2009 110 478

## Description

L'invention concerne le domaine de la mécanique et plus particulièrement celui de l'industrie automobile et encore plus particulièrement celui de la fixation de pièces mécaniques par vis, typiquement la fixation d'un répartiteur sur une pièce tierce du moteur. Une telle vis est en général pré-installée en position haute dans le logement du répartiteur et livrée au client pour faciliter les manipulations de l'opérateur.

Une vis pour le maintien en position haute dans un logement comprend, de façon classique et connue, une tige en deux parties : à proximité de la tête de vis, la tige est lisse puis elle se poursuit par une partie filetée et une pointe d'enfoncement. Les deux parties sont habituellement séparées par une collerette.

L'objectif de la présente invention est de permettre la fourniture d'un ensemble vis + maintien tel que :
- l'extrémité basse de la vis ne fasse pas, ou du moins très peu, saillie au-delà du logement de vis. La vis doit donc être provisoirement bloquée en translation axiale dans le logement dédié du répartiteur. C'est notamment important lors du montage du répartiteur sur le véhicule qui nécessite un mouvement de translation.
- la vis doit être alignée avec l'axe du logement. Toute inclinaison est à éviter pour faciliter le montage par l'opérateur.
- le dispositif de maintien de la vis ne doit pas générer d'endommagement du pas de vis, du logement, etc.
- le dispositif de maintien ne doit pas créer de salissure, de type copeau lors du vissage.
- le dispositif de maintien doit être robuste et s'adapter à tout type de vis dite standard pour qu'il n'y ait pas de modification de vis nécessaire.

On connaît de par le document US 8 057 122 B2, un ensemble d'assemblage dans lequel une vis peut être maintenue dans son logement à l'aide d'une gaine rigide de forme cylindrique. Cette gaine est fixée sur la tige de la vis par un rétrécissement de section et ne permet pas un maintien et ajustement précis ni un positionnement parfaitement vertical ou un rattrapage des jeux notamment en raison de sa rigidité et de sa section circulaire constante. Un autre ensemble est connu par le document US 2009/0110478 A1.

La présente invention a pour but de pallier au moins certains de ces inconvénients et de fournir au moins certains des avantages susmentionnés.

Elle a ainsi pour but un dispositif de maintien en position haute de la vis qui est constitué par un manchon en matière plastique qui coopère avec un bord annulaire formé au niveau du logement de vis, en particulier dans le répartiteur susvisé.

Conformément à la présente invention, le manchon amovible destiné à être placé sur une vis de fixation afin de la maintenir en position, avant son montage final, au-dessus de son logement dans un corps, notamment un répartiteur, est réalisé en un matériau élastiquement déformable et est caractérisé en ce qu'il présente :
- du côté de la tête de la vis, une première portion cylindrique de diamètre intérieur constant et sensiblement égal au diamètre extérieur de la tige de ladite vis à ce niveau, cette première portion étant prolongée vers l'autre extrémité libre de ladite vis par une seconde portion cylindrique de forme évasée vers l'extérieur ou tronconique et munie sur sa surface périphérique extérieure, d'au moins une première et deuxième couronnes d'ergots distantes axialement,
- une fente axiale d'insertion s'étendant sur toute la hauteur dudit manchon et suffisamment large afin de permettre au manchon d'être monté radialement sur la tige de ladite vis et d'y être maintenu,
- au moins une fente axiale partielle s'étendant sur une portion de la hauteur dudit manchon depuis son extrémité libre évasée.

D'autres caractéristiques seront décrites plus en détail dans la description qui va suivre.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- les figures la, 1b et 1c représentent trois vues en 3D du manchon selon l'invention selon trois différents points de vue ;
- la figure 2 représente le manchon selon l'invention monté sur un exemple de vis ; et
- les figures 3a à 3f, représentent des vues en 3D ou en coupe de l'ensemble de la figure 2 et les différentes étapes de son processus d'assemblage avec un répartiteur servant de logement.

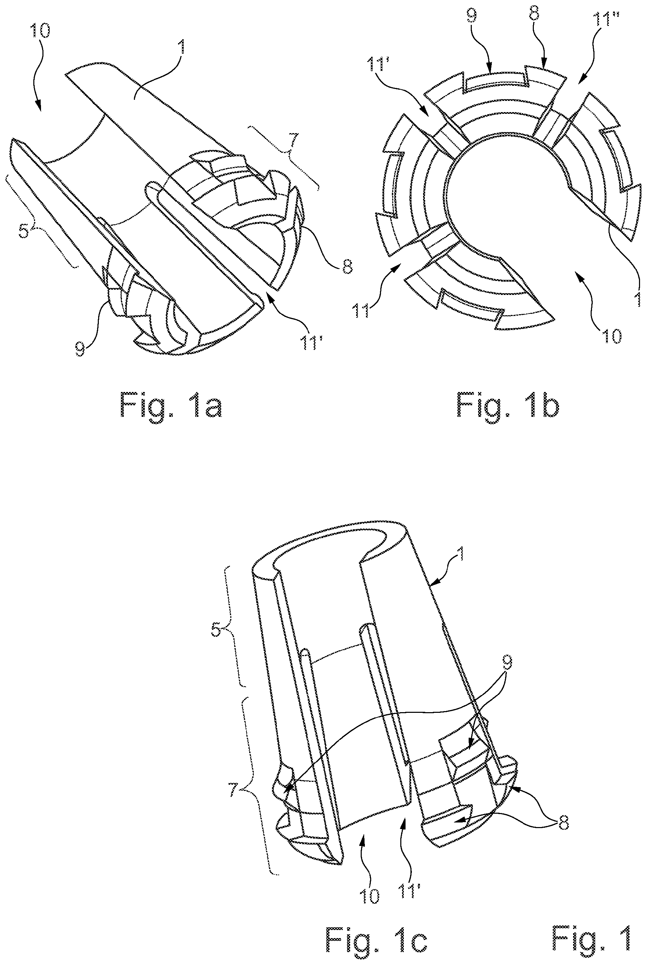

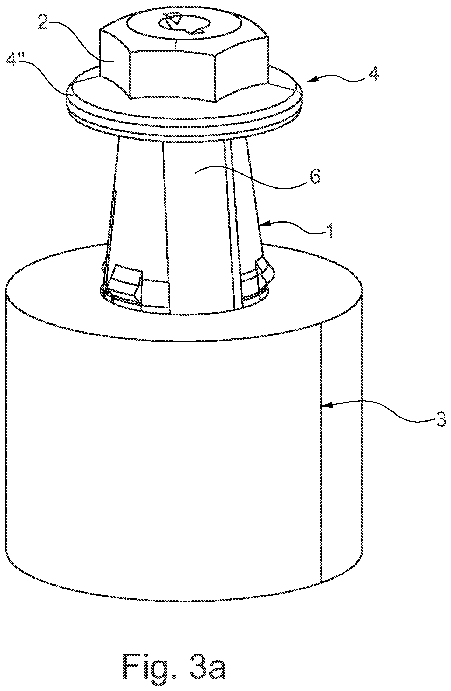

Comme on le voit sur la figure 1, le manchon 1 selon l'invention est un manchon 1 amovible destiné à être placé sur une vis 2 de fixation afin de la maintenir en position, avant son montage final, au-dessus de son logement 3 dans un corps, notamment un répartiteur (cf. par exemple fig. 3a), ledit manchon 1 étant réalisé en un matériau élastiquement déformable et caractérisé en ce qu'il présente :
- du côté de la tête 4 de la vis 2, une première portion cylindrique 5 de diamètre intérieur constant et sensiblement égal au diamètre extérieur de la tige 6 de ladite vis 2 à ce niveau, cette première portion étant prolongée vers l'autre extrémité libre de ladite vis 2 par une seconde portion cylindrique 7 de forme évasée vers l'extérieur ou tronconique et munie sur sa surface périphérique extérieure, d'au moins une première et deuxième couronnes d'ergots 8, 9 distantes axialement,
- une fente axiale d'insertion 10 s'étendant sur toute la hauteur dudit manchon 1 et suffisamment large afin de permettre au manchon 1 d'être monté radialement sur la tige 6 de ladite vis 2 et d'y être maintenu,
- au moins une fente axiale partielle 11 s'étendant sur une portion de la hauteur dudit manchon 1 depuis son extrémité libre évasée.

De préférence, le manchon 1 selon l'invention est réalisé en une matière plastique, par exemple en PA6, PA66, PA6 GF15, PP, etc.

Comme on le voit particulièrement bien sur la figure 1b, le manchon 1 selon l'invention est avantageusement caractérisé en ce qu'il présente au moins deux, de préférence trois fentes axiales partielles 11, 11', 11". Ces dernières assurent un bon compromis entre flexibilité et résistance à l'écrasement et permettent d'assurer un bon fonctionnement de l'ensemble vis 2 + manchon 1 lors du montage.

Le manchon 1 selon l'invention est encore caractérisé en ce que la ou les fentes axiales partielles 11, 11', 11" s'étendent sensiblement jusqu'au niveau de la première portion cylindrique 5. On préserve ainsi une certaine rigidité à ce niveau supérieur et la présence de suffisamment de matière pour un bon contact et un bon guidage de la tige 6 de la vis 2.

Avantageusement le manchon 1 selon l'invention est caractérisé en ce que la ou les fentes axiales partielles 11, 11', 11" présentent, de leur côté non libre, une extrémité arrondie. Ceci est notamment bien visible sur les figures la et 1c. Cette forme permet en particulier une meilleure répartition des contraintes et sollicitations mécaniques s'exerçant sur ledit manchon 1 et concourent à augmenter la durée de vie de ce dernier.

Pour des raisons pratiques et économiques, le manchon 1 selon l'invention est encore caractérisé en ce que toutes les fentes axiales partielles 11, 11', 11" sont de forme et de taille identiques. La production par moulage desdits manchons1 s'en trouve ainsi simplifiée.

Selon un mode de réalisation particulièrement avantageux, le manchon 1 selon l'invention, caractérisé en ce que les première et seconde couronnes d'ergots 8, 9 sont formés par des ergots saillants répartis uniformément sur la périphérie extérieure dudit manchon 1, les deux couronnes étant décalées de sorte que les ergots de l'une des deux couronnes ne recouvrent pas les ergots de l'autre. Ceci est par exemple illustré schématiquement sur les figures la à 1c précitées.

En particulier, le manchon 1 selon l'invention est caractérisé en ce qu'une première couronne d'ergots 8 se situe au niveau de l'extrémité libre et évasée dudit manchon 1, les ergots étant réalisés de manière à former une butée de retenue axiale ou une sorte de butée de retenue axiale coopérant avec un rebord annulaire 12 du logement 3 de la vis 2 permettant, par la déformation élastique du matériau, l'introduction du manchon 1 et de la vis 2 dans ledit logement 3 et d'empêcher le retrait intempestif (au moins) dudit manchon 1.

En outre, le manchon 1 selon l'invention est aussi caractérisé en ce qu'une seconde couronne d'ergots 9 se situe à un niveau supérieur à celui de la première couronne d'ergots 8, les ergots de ladite seconde couronne 9 étant réalisés de manière à reposer sur une surface supérieure du logement 3 afin de retenir le manchon 1 et la vis 2 en position à l'extérieur dudit logement 3 avant leur montage final pour fixer le corps sur une pièce tierce du moteur.

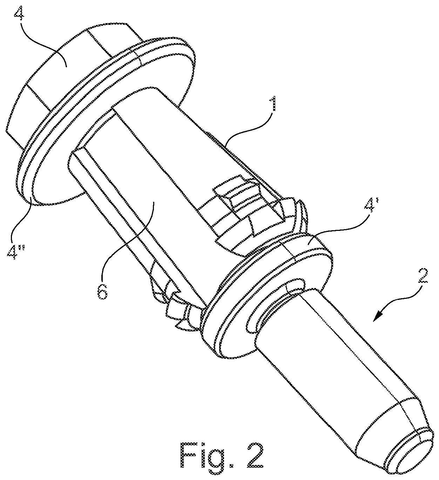

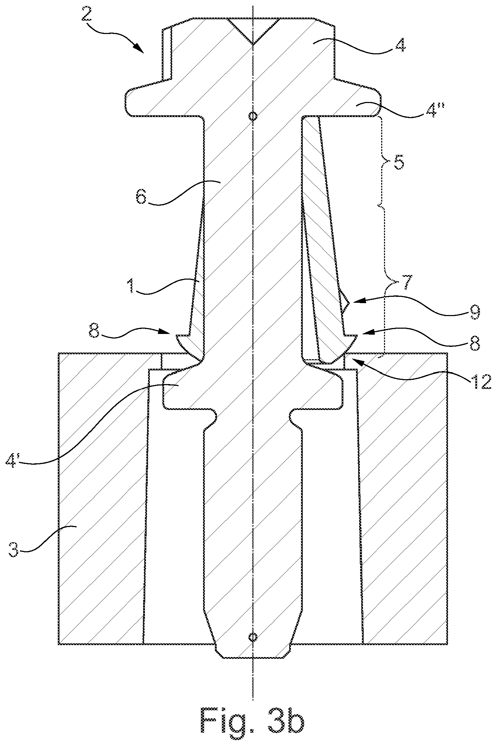

De préférence, les ergots présentent une forme biseautée ou de portion annulaire à base triangulaire pointant vers l'extérieur du manchon 1 qui sera en contact avec le logement 3. On peut également utiliser une succession de tels portions de section triangulaire qui se prolongent avec des angles différents de sorte à former une rampe étagée saillante vers l'extérieur pour les ergots de la seconde couronne d'ergots 9. Pour les ergots de la première couronne d'ergots 8 qui se situe à l'extrémité basse, évasée et libre du manchon 1, on préférera des ergots présentant une forme arrondie vers le bas, comme montré par exemple à la figure 2. Cette forme qui ressemble, en vue de face, à un bras d'une ancre facilitera l'introduction du manchon 1 dans le logement 3 à travers le rebord annulaire 12 (cf. figure 3b). Bien évidemment, d'autres géométries ou combinaisons géométriques sont également possibles.

Grâce à sa fente axiale d'insertion 10 qui s'étend sur toute la hauteur le long de l'axe axial du manchon 1, ce dernier peut être monté aisément, précisément et en toute sécurité sur la tige 6 de la vis 2 dont un exemple classique est illustré notamment à la figure 2 avec le manchon 1 clipé et maintenu sur elle. Le manchon 1 est dimensionné de façon à s'étendre entre la tête de vis 4 et la collerette 4' de la vis 2. Au niveau de la tête 4 de la vis 2 le rebord cylindrique et circulaire supérieur du manchon 1 vient en contact avec le disque de tête 4" sur lequel il repose. La tige 6 de la vis est parfaitement entourée et en contact avec le manchon 1 à ce niveau tant que le diamètre de la section circulaire reste constant dans la première portion cylindrique 5. De l'autre côté, le manchon 1 s'arrête juste au-dessus de la collerette 4' de la vis 4 avec sa première couronne d'ergots 8. Ceci est notamment visible sur la fig. 3b.

En se référant maintenant plus spécialement aux figures 3a à 3f, on va à présent expliquer, de façon schématique et simplifiée, le mode de fonctionnement du manchon 1 selon l'invention.

La figure 3a montre l'ensemble vis 2 et manchon 1 en position haute sur la pièce de logement 3 avant l'insertion de ladite vis lors du montage proprement dit. Ladite vis 2 est bien maintenue en position parfaitement verticale bloquée en translation axiale par les deux couronnes d'ergots 8 et 9 précitées. De préférence, cette partie de la tige 6 de la vis 2 n'est pas filetée.

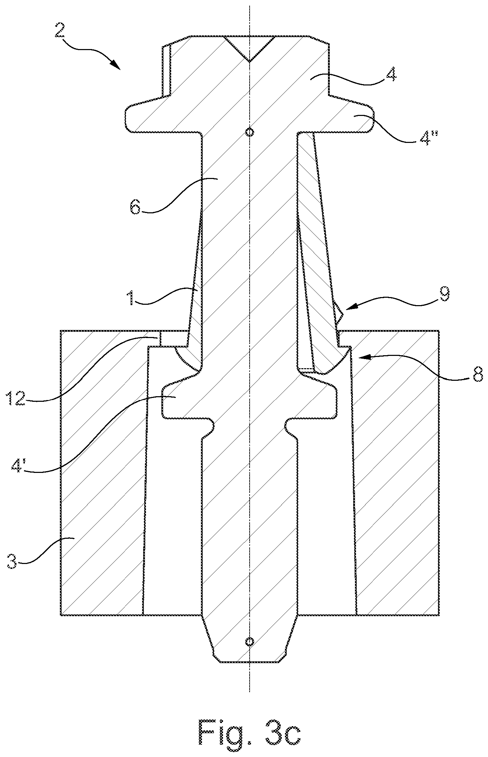

La figure 3b montre la vis 1 avant son introduction dans le logement 3. Grâce à la géométrie et à la nature flexible du matériau du manchon 1, les pattes latérales inférieures glissent sur le rebord annulaire 12 et se rétractent pour permettre l'introduction de l'ensemble dans ledit logement 3. La figure 3c montre une coupe de la position de la figure 3a évoquée précédemment.

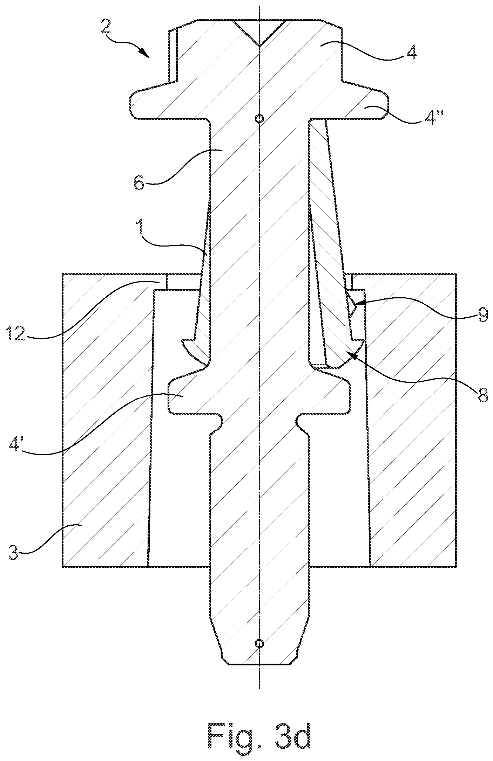

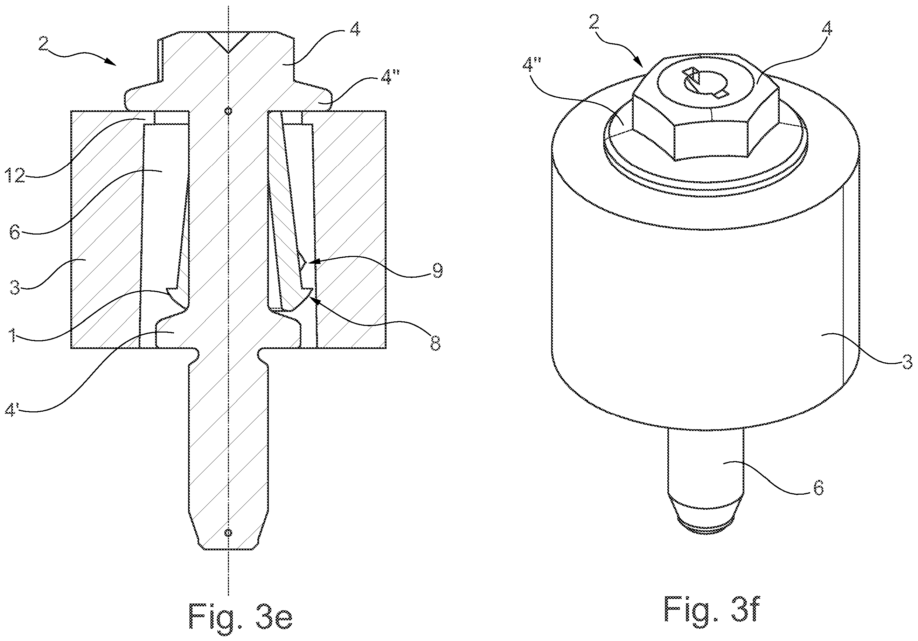

En continuant l'effort d'insertion, la seconde couronne d'ergots 9 passe également le rebord annulaire 12 comme suggéré à la figure 3d. La vis continue à être introduite jusqu'à ce que l'anneau de tête 4" vienne en contact avec le rebord annulaire 12 précité (fig. 3e et fig. 3f).

Autrement dit, la forme conique du manchon 1 définit un espace libre entre la tige 6 et le manchon 1 au niveau des pattes flexibles tandis que la bague de la portion cylindrique 5 est ajustée en diamètre autour de ladite tige 6, au niveau de l'extrémité opposée aux pattes flexibles.

Le manchon 1 et la vis 2 sont insérés par un mouvement de translation et le jeu défini entre les pattes et la tige 6 permet l'engagement des ergots 8, 9 avec la collerette par le retrait des pattes flexibles vers l'intérieur. Les pattes retrouvent leur position après le passage du rebord annulaire 12.

Le manchon 1 selon l'invention présente donc avantageusement les caractéristiques suivantes :
- il a, grâce à sa fente axiale d'insertion 10, la forme d'une bague fendue sur sa longueur ce qui permet une installation simple autour de la partie lisse de la tige 6 de la vis 2.
- cette bague comprend deux parties : une première partie de géométrie cylindrique, près de la tête 4 de vis 2 et une deuxième partie de géométrie conique. La première section ou portion cylindrique 5 assure l'alignement vertical de la vis 2 dans le logement 3 de réception du répartiteur, tandis que la seconde section ou portion cylindrique 7 de forme ou géométrie conique sert à fixer le manchon 1 sur le répartiteur.
- plusieurs fentes axiales partielles 11, 11', 11" sont réparties sur la circonférence de la section de bague conique. Ces fentes forment des ouvertures sur sensiblement au moins 20 % de la hauteur du manchon 1, ce dernier définissant des pattes, de préférence au moins deux pattes ayant une certaine flexibilité.
- chaque patte est munie d'un ergot positionné à l'extrémité libre de la patte et tourné vers l'extérieur, de sorte que le diamètre du manchon 1 pris au niveau de ces ergots est sensiblement plus grand que le diamètre du logement 3 dans le répartiteur pris au niveau de son rebord annulaire 12.
- une seconde couronne d'ergots 9 est présente à distance de la première couronne d'ergots 8 définissant ainsi une gorge annulaire entre les deux couronnes d'ergots.

Les ergots des première et deuxième couronnes 8, 9 ont avantageusement des surfaces biseautées qui faciliteront l'engagement/désengagement desdits ergots avec le rebord annulaire 12 formé dans le logement 3 du répartiteur.

La forme spécifique des ergots de la première couronne 8 (avec une surface biseautée), permet de faciliter le passage des ergots au-delà du rebord annulaire 12 du logement 3 du répartiteur.

Le rebord annulaire 12 formé sur le corps, par exemple le répartiteur, est ainsi reçu dans la gorge formée entre les deux couronnes d'ergots 8, 9, bloquant ainsi tout déplacement axial du manchon 1 et de la vis 2.

La deuxième couronne d'ergots 9 présente également une surface inclinée (chanfrein) sur la surface tournée vers le rebord annulaire 12. Ceci permet de faciliter l'insertion du manchon 1 et de la vis 2 dans le logement 3 du répartiteur lors du vissage pour la fixation du répartiteur.

Avantageusement, les ergots de la deuxième couronne 9 présentent une deuxième surface inclinée à l'opposé de la surface tournée vers le rebord annulaire 12.

Lors de la fabrication du répartiteur, des essais d'étanchéité sont réalisés, nécessitant le vissage des vis 2 sur un support et l'insertion complète du manchon 1 dans son logement 3. Avant la livraison à l'utilisateur final, il est alors nécessaire de repositionner les vis 2 en position haute. Cette opération est facilitée par la forme des ergots de la deuxième couronne 9.

Bien entendu, l'invention n'est pas limitée au mode de réalisation décrit et représenté aux dessins annexés. Des modifications restent possibles, sans sortir pour autant du domaine de protection de l'invention défini par les revendications.

## Revendications

1. Manchon (1) amovible destiné à être placé sur une vis (2) de fixation afin de la maintenir en position, avant son montage final, au-dessus de son logement (3) dans un corps, notamment un répartiteur, ledit manchon (1) étant réalisé en un matériau élastiquement déformable et **caractérisé en ce qu'**il présente :
- une première portion cylindrique (5) de diamètre intérieur constant, destinée à être du côté de la tête (4) de la vis (2) et sensiblement égal au diamètre extérieur de la tige (6) de ladite vis (2) à ce niveau, cette première portion étant prolongée par une seconde portion cylindrique (7) de forme évasée vers l'extérieur ou tronconique et munie sur sa surface périphérique extérieure, d'au moins une première et deuxième couronnes d'ergots (8, 9) distantes axialement, cette prolongation destinée à être orientée vers l'autre extrémité libre de ladite vis (2),
- une fente axiale d'insertion (10) s'étendant sur toute la hauteur dudit manchon (1) et suffisamment large afin de permettre au manchon (1) d'être monté radialement sur la tige (6) de ladite vis (2) et d'y être maintenu,
- au moins une fente axiale partielle (11) s'étendant sur une portion de la hauteur dudit manchon (1) depuis son extrémité libre évasée.

2. Manchon (1) selon la revendication 1, **caractérisé en ce qu'**il présente au moins deux, de préférence trois fentes axiales partielles (11, 11', 11").

3. Manchon (1) selon la revendication 1 ou 2, **caractérisé en ce que** la ou les fentes axiales partielles (11, 11', 11") s'étendent sensiblement jusqu'au niveau de la première portion cylindrique (5).

4. Manchon (1) selon l'une quelconque des revendications 1 à 3, **caractérisé en ce que** la ou les fentes axiales partielles (11, 11', 11") présentent, de leur côté non libre, une extrémité arrondie.

5. Manchon (1) selon l'une quelconque des revendications 1 à 4, **caractérisé en ce que** toutes les fentes axiales partielles (11, 11', 11") sont de forme et de taille identiques.

6. Manchon (1) selon l'une quelconque des revendications 1 à 5, **caractérisé en ce que** les première et seconde couronnes d'ergots (8, 9) sont formés par des ergots saillants répartis uniformément sur la périphérie extérieure dudit manchon (1), les deux couronnes étant décalées de sorte que les ergots de l'une des deux couronnes ne recouvrent pas les ergots de l'autre.

7. Manchon (1) selon l'une quelconque des revendications 1 à 6, **caractérisé en ce que** la première couronne d'ergots (8) se situe au niveau de l'extrémité libre et évasée dudit manchon (1), les ergots étant réalisés de manière à former une butée de retenue axiale destinée à coopérer avec un rebord annulaire (12) du logement (3) de la vis (2) permettant, par la déformation élastique du matériau, l'introduction du manchon (1) et de la vis (2) dans ledit logement (3) et d'empêcher le retrait intempestif dudit manchon (1).

8. Manchon (1) selon la revendication 7, **caractérisé en ce que** la seconde couronne d'ergots (9) se situe à un niveau supérieur à celui de la première couronne d'ergots (8), les ergots de ladite seconde couronne (9) étant réalisés de manière à reposer sur une surface supérieure du logement (3) afin de retenir le manchon (1) et la vis (2) en position à l'extérieur dudit logement (3) avant leur montage.

## Patentansprüche

1. Abnehmbare Hülse (1), welche dazu bestimmt ist, auf eine Befestigungsschraube (2) aufgesetzt zu werden, um sie vor ihrer endgültigen Montage über ihrem Sitz (3) in einem Körper, insbesondere einem Verteiler, in Position zu halten, wobei die Hülse (1) aus einem elastisch verformbaren Material hergestellt ist und **dadurch gekennzeichnet ist, dass** sie aufweist:
- einen zylindrischen ersten Abschnitt (5), der dazu bestimmt ist, sich auf der Seite des Kopfes (4) der Schraube (2) zu befinden, mit konstantem Innendurchmesser, der im Wesentlichen gleich dem Außendurchmesser des Schaftes (6) der Schraube (2) in diesem Bereich ist, wobei dieser erste Abschnitt durch einen zylindrischen zweiten Abschnitt (7) von nach außen aufgeweiteter oder kegelstumpfartiger Form verlängert wird, der auf seiner Außenumfangsfläche mit wenigstens einem ersten und einem zweiten Kranz von Nasen (8, 9) versehen ist, die axial beabstandet sind, wobei diese Verlängerung dazu bestimmt ist, zum freien anderen Ende der Schraube (2) hin ausgerichtet zu werden,
- einen axialen Einführschlitz (10), der sich über die gesamte Höhe der Hülse (1) erstreckt und ausreichend breit ist, um zu ermöglichen, dass die Hülse (1) radial auf dem Schaft (6) der Schraube (2) angebracht und dort gehalten wird,
- wenigstens einen axialen Teilschlitz (11), der sich vom aufgeweiteten freien Ende der Hülse (1) aus über einen Teil ihrer Höhe erstreckt.

2. Hülse (1) nach Anspruch 1, **dadurch gekennzeichnet, dass** sie wenigstens zwei, vorzugsweise drei axiale Teilschlitze (11, 11', 11") aufweist.

3. Hülse (1) nach Anspruch 1 oder 2, **dadurch gekennzeichnet, dass** sich der oder die axialen Teilschlitze (11, 11', 11") im Wesentlichen bis zur Höhe des zylindrischen ersten Abschnitts (5) erstrecken.

4. Hülse (1) nach einem der Ansprüche 1 bis 3, **dadurch gekennzeichnet, dass** der oder die axialen Teilschlitze (11, 11', 11") auf ihrer nicht freien Seite ein abgerundetes Ende aufweisen.

5. Hülse (1) nach einem der Ansprüche 1 bis 4, **dadurch gekennzeichnet, dass** alle axialen Teilschlitze (11, 11', 11") von identischer Form und Größe sind.

6. Hülse (1) nach einem der Ansprüche 1 bis 5, **dadurch gekennzeichnet, dass** der erste und der zweite Kranz von Nasen (8, 9) von vorstehenden Nasen gebildet werden, die gleichmäßig über den Außenumfang der Hülse (1) verteilt sind, wobei die Kränze so zueinander versetzt sind, dass die Nasen des einen der zwei Kränze nicht die Nasen des anderen überdecken.

7. Hülse (1) nach einem der Ansprüche 1 bis 6, **dadurch gekennzeichnet, dass** sich der erste Kranz von Nasen (8) am freien und aufgeweiteten Ende der Hülse (1) befindet, wobei die Nasen so ausgebildet sind, dass sie einen axialen Halteanschlag bilden, der dazu bestimmt ist, mit einem ringförmigen Flansch (12) des Sitzes (3) der Schraube (2) zusammenzuwirken, der durch die elastische Verformung des Materials ermöglicht, die Hülse (1) und die Schraube (2) in den Sitz (3) einzuführen und das unbeabsichtigte Zurückziehen der Hülse (1) zu verhindern.

8. Hülse (1) nach Anspruch 7, **dadurch gekennzeichnet, dass** sich der zweite Kranz von Nasen (9) auf einer Höhe befindet, die über derjenigen des ersten Kranzes von Nasen (8) liegt, wobei die Nasen des zweiten Kranzes (9) so ausgebildet sind, dass sie auf einer Oberseite des Sitzes (3) ruhen, um die Hülse (1) und die Schraube (2) vor ihrer Montage außerhalb des Sitzes (3) in Position zu halten.

## Claims

1. Removable sleeve (1) intended to be positioned on a fastening screw (2) in order to hold the latter in position, before the final mounting thereof, above its housing (3) in a body, notably a distributor, said sleeve (1) being made of an elastically deformable material and **characterized in that** it has:
- a first cylindrical portion (5) of constant inside diameter that is intended to be on the side of the head (4) of the screw (2) and is substantially equal to the outside diameter of the shank (6) of said screw (2) at this level, this first portion being continued by a second cylindrical portion (7) with an outwardly flared or frustoconical shape that is provided on its outer peripheral surface with at least one first and second ring of axially spaced-apart lugs (8, 9), this continuation being intended to be oriented toward the other, free end of said screw (2),
- an axial insertion slot (10) that extends over the entire height of said sleeve (1) and is sufficiently wide to allow the sleeve (1) to be mounted radially on the shank (6) of said screw (2) and to be held there,
- at least one partial axial slot (11) that extends over a portion of the height of said sleeve (1) from the flared free end thereof.

2. Sleeve (1) according to Claim 1, **characterized in that** it has at least two, preferably three partial axial slots (11, 11', 11").

3. Sleeve (1) according to Claim 1 or 2, **characterized in that** the partial axial slot or slots (11, 11', 11") extend substantially as far as the first cylindrical portion (5).

4. Sleeve (1) according to any one of Claims 1 to 3, **characterized in that** the partial axial slot or slots (11, 11', 11") have a rounded end on their side that is not free.

5. Sleeve (1) according to any one of Claims 1 to 4, **characterized in that** all the partial axial slots (11, 11', 11") have an identical shape and size.

6. Sleeve (1) according to any one of Claims 1 to 5, **characterized in that** the first and second rings of lugs (8, 9) are formed by protruding lugs that are distributed uniformly around the outer periphery of said sleeve (1), the two rings being offset such that the lugs of one of the two rings do not overlap the lugs of the other.

7. Sleeve (1) according to any one of Claims 1 to 6, **characterized in that** the first ring of lugs (8) is situated at the free, flared end of said sleeve (1), the lugs being realized so as to form an axial retaining stop intended to cooperate with an annular lip (12) of the housing (3) of the screw (2), making it possible, as a result of the elastic deformation of the material, to introduce the sleeve (1) and the screw (2) into said housing (3) and to prevent unintentional removal of said sleeve (1).

8. Sleeve (1) according to Claim 7, **characterized in that** the second ring of lugs (9) is situated higher up than the first ring of lugs (8), the lugs of said second ring (9) being realized so as to rest on an upper surface of the housing (3) in order to keep the sleeve (1) and the screw (2) in position outside said housing (3) before they are mounted.
